# EUROPÄISCHE PATENTSCHRIFT

(11) **EP 0 593 912 B1**
(45) Veröffentlichungstag und Bekanntmachung des Hinweises auf die Patenterteilung: **03.05.2000**
(21) Anmeldenummer: 93115075.9
(22) Anmeldetag: 20.09.1993
(51) Int. Cl.: G01K 3/10

(54) **Verfahren zur Diagnose der Komponenten eines Heizstromkreises für einen elektrisch leitfähigen Körper**
Method for the diagnosis of the components of a heating circuit for an electrically conductive body
Procédé de diagnostic des composants d'un circuit de chauffage d'un corps électroconducteur

(30) Priorität: 17.10.1992 DE 4235113
(43) Veröffentlichungstag der Anmeldung: 27.04.1994
(73) Patentinhaber: Bayerische Motoren Werke Aktiengesellschaft, 80788 München (DE)
(72) Erfinder: Schneider, Josef, D-85250 Altomünster (DE); Ranzinger, Günter, D-85748 Garching (DE); Hohenner, Hans, D-80331 München (DE)

(56) Entgegenhaltungen:
- DE-A- 3 822 415
- DE-A- 4 033 026
- DE-C- 3 338 788
- FR-A- 2 321 117
- US-A- 4 441 329
- US-A- 4 972 099
- TRANSACTIONS OF THE INSTITUTE OF MEASUREMENT AND CONTROL Bd. 13, Nr. 2 , 1991 , DORKING GB Seiten 75 - 90 MC GHEE E.A. 'ELECTRONICS AND COMPUTERS IN THERMAL SYSTEMS: REVIEWING CURRENT TRENDS'
- ELECTRONICS Bd. 49, Nr. 13 , 24. Juni 1976 , NEW YORK US Seiten 114 - 115 M. COPE E.A. 'ENGINE-TEMPERATURE MONITOR WARNS PILOT OF DANGER'
- PATENT ABSTRACTS OF JAPAN vol. 11, no. 109 (P-564)(2556) 7. April 1987 & JP-A-61 259 130 (NAKAYAMA K.K.) 17. November 1986
- PATENT ABSTRACTS OF JAPAN vol. 7, no. 202 (P-221)(1347) 7. September 1983 & JP-A-58 100 723 (FUJITSU K.K.) 15. Juni 1983

## Beschreibung

Die Erfindung bezieht sich auf ein Verfahren zur Diagnose der Komponenten eines Heizstromkreises für einen elektrisch leitfähigen Körper.

Bei diesem Körper handelt es sich beispielsweise um einen elektrisch beheizbaren Katalysator für die Abgase einer Brennkraftmaschine oder aber auch um ein Bauteil eines Kraftfahrzeugs, wie beispielsweise eine elektrische Sitz- bzw. Heckscheibenheizung. In all diesen Fällen ist es notwendig, eine möglichst exakte Diagnose der verschiedenen Komponenten des Heizstromkreises vorzunehmen. Bei diesen Komponenten handelt es sich beispielsweise um einen Energiespeicher, den Heizkörper selbst, elektronische Schalt- und Regelglieder sowie verschiedene Sensoren, beispielsweise für die Temperatur zur Vermeidung einer Überhitzung des Körpers bzw. der zugehörigen elektronischen Bauteile.

Es ist in diesem Zusammenhang bekannt, die Diagnose punktuell vorzunehmen. Zumindest ein Teil der Komponenten wird dabei individuell mit geeigneten Sensoren versehen, die eine Aussage über den Betriebszustand dieser Komponente liefern. Sofern jeder dieser Sensoren eine ordnungsgemäße Funktion der zugehörigen Komponente signalisiert, wird der Heizstromkreis in der gewünschten Weise betrieben. Ein derartiges Verfahren ist bauteilaufwendig und führt auch zu einer erhöhten Fehlerwahrscheinlichkeit, da neben den einzelnen Komponenten auch die zu ihrer Überwachung eingesetzten Elemente fehlerbehaftet sind. Zudem ist die Prüfung jeder der Komponenten auf die Einhaltung eines vorgegebenen Richtwertes bzw. die Unterschreitung eines kritischen Grenzwertes wenig aussagekräftig. Dies gilt vor allem dann, wenn es sich um eine Komponente handelt, die sich bereits bei ordnungsgemäßem Betrieb mit ihrer Temperatur in der Nähe des Bereichs befindet, bei dem eine irreversible Zerstörung auftritt.

Der Erfindung liegt die Aufgabe zugrunde, ein Verfahren der eingangs genannten Art zu schaffen, bei dem auf einfache Weise eine Aussage über die verschiedenen Komponenten des Heizstromkreises und einen möglicherweise auftretenden Fehler möglich ist.

Die Erfindung löst diese Aufgabe durch die kennzeichnenden Merkmale des Patentanspruchs 1.

Unter dem Begriff "Bestimmung der Temperatur des Körpers" ist dabei sowohl die lokale Bestimmung der Temperatur als auch die Ausgabe eines Mittelwertes aufgrund von Temperaturmessung an verschiedenen Stellen des Körpers zu verstehen. Der Grundgedanke der Erfindung besteht darin, den Temperaturverlauf des Körpers selbst zu analysieren und mit einem vorgegebenen Soll-Verlauf zu vergleichen. Sofern der tatsächliche Verlauf zumindest annähernd dem Ideal-Verlauf entspricht, folgt daraus, daß die einzelnen Komponenten des Heizstromkreises einschließlich des Körpers selbst in Ordnung sind. Andererseits läßt sich ein Fehler einer der Komponenten in der Regel anhand einer charakteristischen Abweichung des Temperaturverlaufs vom Ideal-Verlauf erkennen. Es wird somit möglich, allein mit Hilfe des Temperaturverlaufs sowohl die ordnungsgemäße Funktion sämtlicher Komponenten als auch einen eventuellen Fehler einer der Komponenten zu erkennen. Sofern der Temperaturverlauf sich nicht mit einem der vorgegebenen auch für die verschiedenen Fehler charakteristischen Verläufe deckt, kann daraus geschlossen werden, daß mehrere Fehler im Heizstromkreis gleichzeitig aufgetreten sind. Neben der Existenz eines Fehlers läßt sich auch erkennen, daß ein derartiger Fehler nur vorübergehend aufgetreten ist. Es wird damit möglich, anhand des zeitlichen Verlaufs auch auf das Zeitverhalten des Fehlers selbst zu schließen.

Der Vergleich der Kennlinie mit der vorgegebenen Kennlinie kann auf unterschiedliche Weise vorgenommen werden. Es ist möglich, die Differenz der aktuellen Werte, ggf. betragsmäßig summiert, zu bestimmen und den Fehler aus dem zeitlichen Integral des Differenzbetrags zu erkennen. Dabei ist es auch möglich, Fertigungs- und Bauteiltoleranzen auszuschließen. Diese werden durch die Vorgabe einer definierten Bandbreite der Soll-Kennlinie erfaßt.

Neben dem Vergleich der Ist-Kennlinie allein mit der für den Idealzustand repräsentativen Soll-Kennlinie kann auch der jeweils auftretende Fehler individuell mit Hilfe von Kennlinien bestimmt werden, die für den jeweiligen Fehler charakteristisch sind. Auch hier kann ein Toleranzband vorgegeben werden, das jedem der Fehler zugeordnet ist und das die angegebenen Fertigungs- und Bauteiltoleranzen berücksichtigt.

Schließlich kann bzw. können die Soll-Kennlinie(n) aus einem Kennlinienfeld entnommen werden, auf das entsprechend den aktuellen Betriebsbedingungen des Körpers zugegriffen wird. Dabei werden dynamische Vorgänge berücksichtigt, die im Umfeld des Heizstromkreises auftreten und die, beispielsweise im Fall des elektrisch beheizbaren Abgaskatalysators, durch den Betriebszustand der vorgeschalteten Brennkraftmaschine bestimmt sind. Schließlich kann ergänzend zur Durchführung der erfindungsgemäßen Diagnose auch ein ggf. auftretender kritischer Fehler erkannt und schädliche Folgen ausgeschlossen werden. Hierzu wird der Anstieg der Temperatur über einen vorgegebenen Grenzwert in eine Notmaßnahme umgesetzt, mit der der Anstieg der Temperatur unterbrochen und damit die kritische Komponente vor einer bleibenden Schädigung geschützt wird.

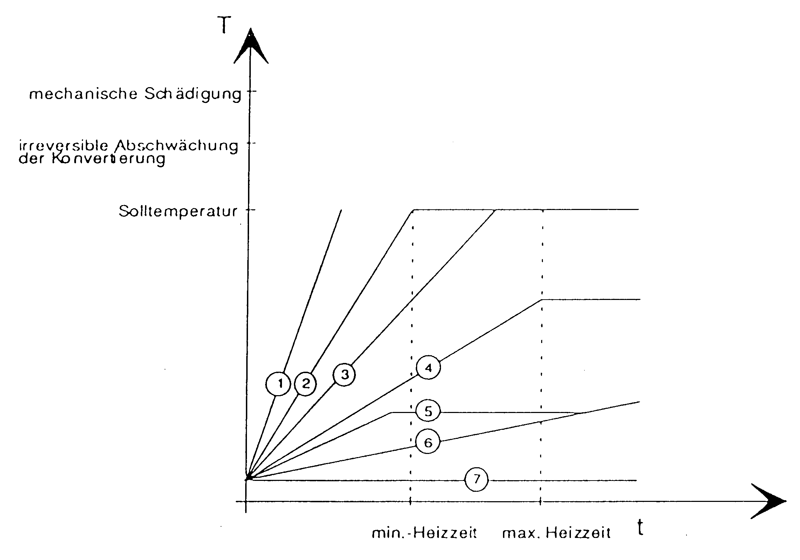

Anhand der Zeichnung ist die Erfindung weiter erläutert.

In der einzigen Figur ist der Temperaturverlauf eines elektrisch beheizbaren Katalysators dargestellt. Dieser befindet sich in einem Heizstromkreis, der aus einer Energiequelle (Batterie) gespeist wird und in dem Leitungen zwischen der Energiequelle und dem Katalysator vorgesehen sind. Ferner befindet sich ein Temperatursensor bzw. mehrere derartige Sensoren im bzw. am Katalysator. Bei diesen Temperatursensoren handelt es sich um einen elektrischen Widerstand, der temperaturabhängig veränderlich ist. Die an diesen Widerständen abfallende Spannung ist somit ein eindeutiges Maß für die Temperatur des Katalysators.

Die mit 1 bis 7 bezeichneten Temperaturverläufe sind charakteristisch für Fehler bzw. für den ordnungsgemäßen Zustand des Heizstromkreises. Die Temperaturänderung wird beispielsweise in drei Bereichen ausgewertet:
1. bis zu der mit minimaler Heizzeit bezeichneten Schwelle, bei der der Katalysator bei ordnungsgemäßer Funktion des Heizstromkreises seine Solltemperatur erreicht,
2. zwischen der minimalen Heizzeit und der maximalen Heizzeit, in der der Katalysator bei gleichbleibender Temperatur (= Solltemperatur) weiterhin beheizt wird und schließlich
3. nach der maximalen Heizzeit, in der der Katalysator aufgrund der dann einsetzenden exothermen Reaktion der Abgase beheizt wird.

Anhand der aktuellen Ist-Kennlinie lassen sich Temperaturanstiege erkennen, die normal (Kennlinie 2), zu flach (Kennlinien 3 bis 7), zu steil (Kennlinie 1) sind. Ein ggf. fehlender Anstieg, ein plötzlicher steiler Anstieg, ein unsteter Verlauf, ein unplausibler Verlauf sowie auch ein Verlauf, der über mehrere Heizperioden immer flacher wird, läßt sich ebenfalls erkennen. Für letzteres ist es erforderlich, die jeweiligen Ist-Kennlinien abzuspeichern und mit der jeweils nachfolgenden Ist-Kennlinie einer sich anschließenden Heizperiode zu vergleichen.

Die Temperatur des Katalysators wird über einen Temperatursensor erfaßt und an ein nicht dargestelltes Motorsteuergerät weitergeleitet. Das Steuergerät errechnet zyklisch den Temperaturgradient und vergleicht ihn mit dem Gradienten der Ideal-Kennlinie (2) allein oder mit Gradienten in abgespeicherten Kennlinienfeldern. Die Kennlinienfelder beinhalten Kennlinien von Heizvorgängen, wie sie für die ordnungsgemäße Funktion des Heizstromkreises charakteristisch sind sowie für Heizvorgänge unter verschiedenen Betriebsbedingungen der Brennkraftmaschine. Aus den zeitlichen und betragsmäßigen Abweichungen von der Ideal-Kennlinie oder von den für verschiedene Fehler charakteristischen Kennlinien 1, 3-7 werden die genannten Symptome erkannt und Fehler in den einzelnen Komponenten diagnostiziert. Der mit dem Temperatursensor erfaßte Temperaturbereich ist so ausgelegt, daß sowohl eine irreversible Verminderung des Katalysator-Konvertierungsgrades als auch ein möglicher Abbrand des Katalysators rechtzeitig erkannt und verhindert werden kann.

Im einzelnen läßt sich zu den Temperaturverläufen folgendes feststellen:

Kurve 1: Der zu steile Anstieg läßt darauf schließen, daß der Heizstrom zu hoch und/oder der Heizwiderstand, d. h. der elektrische Widerstand des Katalysators, zu gering sind. Der Fehler dürfte wahrscheinlich durch einen partiellen Kurzschluß im Katalysator bzw. im Heizstromkreis zu suchen sein.

Die mit 2 bezeichnete Kurve ist für den normalen, fehlerfreien Temperaturverlauf charakteristisch.

Bei der Kurve 3 ist der Anstieg zu flach, die Solltemperatur wird später als nach der minimalen Heizzeit erreicht. Das Erreichen der Solltemperatur andererseits zeigt, daß die Heizleistung ausreichend ist. Als Fehlerursache kommt eine nicht voll geladene Batterie oder eine Batterie mit geringerer Leistung, ein Defekt der Batterie-Ladeelektronik (nicht dargestellt) sowie der Batterie selbst in Frage.

Bei der Kennlinie 4 liegt ein zu geringer Anstieg als auch das Nicht-Erreichen der Solltemperatur vor. Die Heizleistung ist demnach zu gering. Als Fehlerursachen kommt eine nicht voll geladene Batterie, eine defekte Ladeelektronik oder die Batterie selbst in Frage.

Die mit 5 bezeichnete Kennlinie deutet auf eine zu geringe Heizleistung hin. Es handelt sich um einen Fehler in der Steuerung des Heizstromkreises. Der Fehler kann dabei sowohl in der Steuerung, einer zu geringen Heizspannung, einer nicht ausreichenden Ladung der Batterie oder einem Defekt der Ladeelektronik oder der Batterie selbst zu suchen sein.

Die mit 6 bezeichnete Kennlinie läßt zwar keine differenzierte Aussage zu, doch ergibt sich daraus, daß zumindest der Temperatursensor funktionsfähig ist. Durch Vergleich mit dem Temperaturverlauf bei ausgeschalteter Katalysatorheizung ergibt sich beispielsweise, daß in diesem Fall der Katalysator nicht elektrisch beheizt wird und daher ein Fehler im Heizstromkreis vorliegt.

Schließlich zeigt die mit 7 bezeichnete Kennlinie, daß der Temperatursensor selbst defekt ist, da auch ohne Beheizung eine Temperaturerhöhung aufgrund der eintretenden exothermen Katalysator-Reaktion auftritt.

Damit wird es möglich, anhand nur eines einzigen Temperatursensors auf einen Fehler einer oder mehrerer Komponenten des elektrischen Heizstromkreises zu schließen und ggf. erforderliche Abhilfemaßnahmen einzuleiten.

## Patentansprüche

1. Verfahren zur Diagnose der Komponenten eines Heizstromkreises für einen elektrisch leitfähigen Körper, dadurch gekennzeichnet, daß die Temperatur des Körpers bestimmt und der zeitliche Verlauf dieser Temperatur als Ist-Kennlinie gespeichert wird, daß die Ist-Kennlinie mit einer vorgegebenen Soll-Kennlinie verglichen wird und daß die Übereinstimmung der beiden Kennlinien bewertet wird.

2. Verfahren nach Anspruch 1, dadurch gekennzeichnet, daß die Ist-Kennlinie mit mehreren Soll-Kennlinien verglichen wird, die für definierte Fehler der Komponenten charakteristisch sind und daß aus der Übereinstimmung der Ist-Kennlinie und der nächstgelegenen Soll-Kennlinie der Fehler erkannt wird.

3. Verfahren nach Anspruch 1 oder 2, dadurch gekennzeichnet, daß die Soll-Kennlinie(n) aus einem Kennlinienfeld entnommen werden, auf das entsprechend den Betriebsbedingungen des Körpers zugegriffen wird.

4. Verfahren nach einem der Ansprüche 1 bis 3, dadurch gekennzeichnet, daß bei einem Anstieg der Temperatur über einen vorgegebenen Grenzwert die Diagnose abgebrochen und eine Notmaßnahme ausgelöst wird.

## Claims

1. A method of diagnosing the components of a heating circuit for an electrically conductive body, characterised in that the temperature of the body is determined, the variation in time of the temperature is stored as the actual characteristic, the actual characteristic is compared with a preset characteristic and the similarity between the two characteristics is evaluated.

2. A method according to claim 1, characterised in that the actual characteristic is compared with a number of set characteristics which are typical of defined faults in the components, and the fault is recognised by comparing the actual characteristic with the nearest set characteristic.

3. A method according to claim 1 or 2, characterised in that the set characteristic or characteristics are taken from a family of characteristics referred to in accordance with the operating conditions of the body.

4. A method according to any of claims 1 to 3, characterised in that if the temperature rises above a preset critical value the diagnosis is interrupted and remedial action is triggered.

## Revendications

1. Procédé de diagnostic des composants d'un circuit de chauffage d'un corps électriquement conducteur,
caractérisé en ce que
- la température du corps est déterminée et l'évolution dans le temps de cette température est mise en mémoire en tant que courbe caractéristique réelle,
- on compare la courbe caractéristique réelle à une courbe caractéristique de consigne prédéfinie et
- on évalue la coïncidence des deux courbes caractéristiques.

2. Procédé selon la revendication 1,
caractérisé en ce que
- la courbe caractéristique réelle est comparée à plusieurs courbes caractéristiques de consigne, qui sont caractéristiques pour des défauts définis des composants, et
- on identifie le défaut à partir de la coïncidence entre la courbe caractéristique réelle et la courbe caractéristique de consigne la plus proche.

3. Procédé selon la revendication 1 ou 2,
caractérisé en ce que
la ou les courbes caractéristiques de consigne sont tirées d'un champ de courbes caractéristiques, auquel on se réfère en fonction des conditions de fonctionnement du corps.

4. Procédé selon l'une des revendications 1 ou 3,
caractérisé en ce que
lors d'une montée de la température au dessus d'une valeur limite le diagnostic est interrompu et on déclenche une mesure d'urgence.
